# EUROPEAN PATENT APPLICATION

(11) **EP 2 444 134 A1**
(43) Date of publication of application: **25.04.2012**
(21) Application number: 10188096.1
(22) Date of filing: 19.10.2010
(51) Int. Cl.: A63F 13/12

(54) **Methods, server system and browser clients for providing a game map of a browser-based online multi-player game**

(71) Applicant: Travian Games GmbH, 80807 München (DE)
(72) Inventor: Feige, Oliver, 80807 München (DE)
(74) Representative: Wegner, Hans

(57) **Abstract**

The present invention concerns a method for displaying a game map (100) of a browser-based online multi-player game, wherein each browser client (10) displays only a selectable portion of the game map (100) and wherein the game map (100) is modified by actions of a plurality of players of the game, the method comprising the following steps:
a. performing at least one game action by a first browser client (10) of a first player that leads to a modification on the game map (100); and
b. upon changing a selection of the game map (100) to be displayed by a second browser client (10) of a second player, updating at least the selected portion of the game map (100) to reflect the modification for display at the second browser client (10).

## Description

### 1. Technical Field

The present invention refers to methods, a server system and browser clients for providing a game map of a browser-based online multi-player game.

### 2. The Prior Art

In the field of computer games, browser-based online multi-player games are known, wherein a plurality of players (e.g. more than 10,000) each use a web browser (e.g. Microsoft Internet Explorer, Mozilla Firefox, Google Chrome or Apple Safari) on a client computer to simultaneously participate in a computer game that is hosted on one or more server computers. The servers and clients are typically distributed over a wide geographic area (e.g. spanning different continents) and communicate over networks such as the internet. Importantly, in browser-based online multi-player games, the front-end for the player is formed only by a standard web browser present on the client computer. Contrary to other types of games, browser-games do not require the player to use any dedicated software or hardware, as is the case e.g. in console games for special gaming consoles such as playstation or Xbox and common computer games.

In certain types of games, e.g. combative strategy games, a portion of a shared game map is displayed within the web browsers of the respective client computers. In order to participate in the game, the players may move characters, armies, or the like on the map and may also manipulate the map itself (e.g. by building houses, lumbering forests, or the like). Such types of games are typically played simultaneously by tens of thousands of players, wherein actions by distinct players are considered simultaneous (in the context of transaction-less protocols that are typically used in internet communication), if the players have sent a request to the server within a short time interval. In this context, it is important to ensure that when a certain player performs an action leading to a change on the game map, all other players see the most up-to-date version of the map on their respective browser clients. However, this issue is especially difficult in multi-player online games due to the vast amount of actions performed by the players and the resulting updates to the game map. Further, the game map typically comprises a plurality of graphics representing the individual elements on the map. Due to the size of such graphics, an efficient provision of the map data to the vast amount of clients is necessary in order to keep the required network bandwidth to a minimum.

Known browser-based computer games typically support displaying a cut-out of the entire game map in each player's browser displaying a detailed view of a portion of the playing field, as well as an overview map, wherein the overview map is a greatly simplified representation of the playing field (e.g. by displaying only rectangles of different colour). Typically, the game map is divided into a number of playing fields and each field is overlaid with a graphic that represents one particular element, e.g. a village, a forest, etc.. Due to this 1-to-1 relationship between map elements and fields, only very simple game maps can be displayed. In particular, such known game maps do not support an efficient zooming functionality, since such zooming would lead to inacceptable performance. For example, an exemplary portion of a common game map of 20 x 15 fields would require 300 graphics. If one would zoom out of such a 20 x 15 portion, e.g. in order to display 40 x 30 fields, this would quadruple the amount of graphics to be rendered to 1,200. If further, each field was to be rendered by three graphics layered on top of each other, this would result in 3,600 graphics to be rendered. However, in a variety of standard browsers conventionally employed by computer game players, rendering such vast amounts of graphics would lead to inacceptable performance or is even impossible without additional plugins installed in the browser. This is particularly an issue in browser-based online multi-player games using a game map as shared playing field, where it is crucial that each player has up-to-date information about how the other players operate on the game map. An efficient updating of the map for all players, however, is hardly possible due to the above-described large amount of graphics involved.

In the prior art, it is known to display static maps (i.e. maps that cannot be edited by the user) within web browsers, e.g. in products such as Google Maps (http://maps.google.com/). Further, there are products that build upon Google Maps and enrich the provided static map with dynamic information on the client. One example is Traintimes (http://traintimes.org.uk/map/tube/), which provides a live view of all London underground railways on top of a map provided by Google Maps using a respective application programming interface (API). However, the user has no possibility of manipulating the map material itself, or of adding his own information to the map.

It is therefore the technical problem underlying the present invention to more efficiently provide a game map of a browser-based online multi-player game, thereby at least partly overcoming the above explained disadvantages of the prior art.

### 3. Summary of the Invention

This problem is according to one aspect of the invention solved by a method for displaying a game map of a browser-based online multi-player game, wherein each browser client displays only a selectable portion of the game map and wherein the game map is modified by actions of a plurality of players of the game. In the embodiment of claim 1, the method comprises the steps of:
a. performing at least one game action by a first browser client of a first player that leads to a modification on the game map; and
b. upon changing a selection of the game map to be displayed by a second browser client of a second player, updating at least the selected portion of the game map to reflect the modification for display at the second browser client.

Accordingly, each time one of a vast plurality of game players (possibly one of tens of thousands) performs a game action that leads to a modification on the shared game map, all other players receive the update at their respective browser clients and can thus display the most up-to-date game map information. The updating comprises updating at least the selected portion of the game map displayed at the respective browser client, which may comprise updating only the displayed selected portion, updating the displayed selected portion plus a "pre-load area" around the selected portion (e.g. one or more rows of map tiles surrounding the selected portion), or the entire game map. Thus, the method ensures real-time in a browser-based online multi-player game, in that it is guaranteed that all browser clients see the most current map information at all times.

However, applicant has found that updating a game map automatically each time one of the possibly thousands of players triggers a modification thereon would lead to inacceptable performance due to the vast amount of activity in modern multi-player browser games. Therefore, the browser clients are in the above embodiments only provided with the updated map information upon specific request, i.e. when a selection of the game map to be displayed by the respective browser client is detected. Since the updating is thus triggered by the individual browser clients ("client pull"), the updating requires less processing resources as e.g. compared to a conventional updating of all browser clients that is triggered by the server ("server push").

Further, the embodiment of claim 2 concerns a method for providing a game map of a browser-based online multi-player game, wherein each browser client displays only a selectable portion of the game map and wherein the game map is modified by actions of a plurality of players of the game, the method comprising the following steps:
a. detecting at least one game action performed at a first browser client (10) of a first player that leads to a modification on the game map (100); and
b. upon detecting a change of a selection of the game map (100) to be displayed by a second browser client (10) of a second player, providing an update of at least the selected portion of the game map (100) to reflect the modification for display at the second browser client (10).

Accordingly, this embodiment concerns the server-side method steps, while the embodiment of claim 1 is directed to the client-side method steps.

In both embodiments, the step of updating (or providing an update of, respectively) at least the selected portion of the game map may be performed in response to the second player scrolling the portion of the game map displayed on the second browser client. Additionally or alternatively, the step of updating (or providing an update of, respectively) at least the selected portion of the game map may be performed in response to the second player zooming in or out of the portion of the game map displayed on the second browser client. Accordingly, the update is performed at the time when the player anyway wants to change the visible portion of the game map. In a preferred embodiment of the present invention, scrolling is possible in a continuous manner, i.e. on a pixel basis, and zooming is possible in an array of predetermined zoom levels. However, also continuous zooming may be provided.

Further, the at least one game action that leads to a modification on the game map may comprise creating a common marking on the game map and wherein the common marking is hidden on the updated game map of the second browser client, if the second player does not belong to a predetermined group. A common marking is a marking that is intended to be visible by all players of the game belonging to the same group. A common marking may be created by one of the players on a respective browser client and / or by the at least one server (e.g. an "adventure" marking that represents a server-generated quest to be solved by the players of the game).

In yet another aspect, the above client-side methods may comprise the steps of scrolling the selected portion of the game map by the second browser client; and if the selected portion approaches a border of the game map, the second browser client shifting a part of the game map that is no longer visible to the opposite side of the game map, so that it is visible beyond the border of the game map. Accordingly, when a portion of the map within the area visible inside the client's browser is not visible anymore because the player has scrolled the game map, the now invisible map portion is moved to the opposite border of the game map. Thus, the player has the impression of an "endless" game map, although the actual amount of stored map portions is finite.

In a further aspect of the present invention, the above server-side methods may comprise the following steps: receiving by at least one web server a request from the second browser client for updating at least the selected portion of the game map; generating by the at least one web server static map data for at least the selected portion of the game map, wherein the static map data is not affected by any game action; generating by the at least one web server dynamic map data for the game map, wherein the dynamic map data is affected by the game action; sending the static and the dynamic map data from the at least one web server to the second browser client for assembly at the second browser client to generate the updated selected portion of the game map. Accordingly, the aspect defines a particularly efficient approach for delivering map information to a plurality of browser clients of a browser-based online multi-player game. The map information to be provided to the clients is split into at least two parts, depending on the nature of the game map. More specifically, static map data that is the same for all clients (and preferably determined by the web server, e.g. topologic elements such as forests, lakes, mountains, villages, etc.) are generated at the web server independently of dynamic map data, which is specific to the requesting client (and preferably determined by the respective client, e.g. markings, flags, etc.). Static map data may be map data which is completely static, i.e. it never changes during the course of a game, or map data which changes only very rarely (e.g. when building a new village, which is a game action that occurs only infrequently), whereas dynamic map data changes more frequently. Due to the splitting of static and dynamic map data, the static and dynamic map data can be generated at the web server and delivered to the browser client independently, i.e. in any order, or even in parallel, leading to a particularly efficient provision of the browser client(s) with the map data. Further, the splitting between static and dynamic map data allows for a particularly efficient caching of the map data, as will be apparent from the following description.

Further, the method may comprise the further step of storing the generated static map data in a cache that is accessible to the at least one web server. Accordingly, the web server may reuse the cached static map data for future requests for the same portion of the game map, thereby avoiding the need for generating the static map data each time anew and thus saving processing resources at the web server.

Preferably, the generated dynamic map data is not stored in the cache accessible to the at least one web server. Applicant has found that dynamic map data typically changes very frequently and thus caching such dynamic map data would be very expensive, since the cache would be outdated quite fast. As a result, caching the static map data (which changes only rarely), but not caching the dynamic map data provides a particularly advantageous trade-off between saving network bandwidth and needed processing resources of the web server.

The cache may be a shared cache accessible to a plurality of web servers. Accordingly, the cache may be shared across many web servers, so that if one particular web server has already generated static map data, this static map data can be reused by all other web servers. Thus, the processing load on the web servers is further minimized.

In one aspect of the above server-side methods, the method may comprise the steps of: detecting a change of a zoom level of the selected portion of the game map by the second browser client; generating by the at least one web server at least one graphic representing a part of the game map at the new zoom level; and transmitting the at least one graphic from the at least one web server to the requesting browser client. Preferably, the at least one graphic is generated with more or less detail displayed therein, depending on the zoom level. For example, when a high zoom level is selected (i.e. a large portion of the overall game map is to be displayed), the at least one graphic may comprise only static map data, whereas at a low zoom level (i.e. when a detailed view of a portion of the game map is desired), the at least one graphic may comprise both static and dynamic map data. At a "middle" zoom level, the at least one graphic may comprise only a portion of the static and / or dynamic map data. It is further noted that a given graphic generated by the at least one web server encompasses preferably a considerable portion of the game map (e.g. the entire selectable portion; see above, or multiple individual map fields; see below). As a result, the at least one browser client is provided with less graphics than if each individual map field of the game map would be rendered as an individual graphic (as is conventional in the prior art; see above), thereby increasing the efficiency of rendering the overall map to a great extent. In a preferred embodiment, the "resolution" of the map blocks, i.e. the amount of map blocks needed to render the game map is selected so that the map blocks can be rendered at the browser client without any additional browser plugins (such as Macromedia Flash), but only using the browser's standard HTML and / or JavaScript capabilities.

In one aspect of the above client-side methods, the step of updating at least the selected portion of the game map may comprise the steps of: receiving at the second browser client static and dynamic map data from at least one web server; and assembling the static and dynamic map data at the second browser client to generate the updated selected portion of the game map. Additionally or alternatively, the method may further comprise the step of storing the static map data and / or the dynamic map data received by the at least one browser client in a browser cache of the respective browser client. Accordingly, a client-side caching is provided, alternatively to or in addition to a server-side caching explained above. If a static / dynamic map data is already stored in the browser cache, there is no need anymore to request the data from the web server, so that the network bandwidth usage is minimized to a great extent.

The present invention is further directed to a server system for providing a game map of a browser-based online multi-player game to a plurality of browser clients, the server system being adapted to perform any of the above server-side methods. Further, a plurality of browser clients is provided for displaying a game map of a browser-based online multi-player game, the browser clients being adapted to perform any of the above client-side methods. It will be appreciated that both the server system and the plurality of browser clients may be provided in hardware, software, computer programs, or any combination thereof.

### 4. Short Description of the Drawings

In the following detailed description, presently preferred embodiments of the invention are further described with reference to the following figures:
- Fig. 1a:: A schematic view of a game map according to an embodiment of the invention;
- Fig. 1b:: A schematic view of different zoom levels according to an embodiment of the invention;
- Fig. 1c:: An exemplary map with landscape elements according to an embodiment of the invention;
- Fig. 2:: An exemplary system according to an embodiment of the invention;
- Fig. 3:: A diagram illustrating the operation of a system according to an embodiment of the invention with no caching;
- Fig. 4:: A diagram illustrating the operation of a system according to an embodiment of the invention with server-side caching;
- Fig. 5:: A diagram illustrating the operation of a system according to an embodiment of the invention with client-side caching;
- Fig. 6:: An example of a layered map block according to an embodiment of the invention;
- Fig. 7:: An example of block shifting at the browser client according to an embodiment of the invention;
- Fig. 8:: An example of a layered block comprising static map data according to an embodiment of the invention;
- Fig. 9:: An example of mapping a requested area (the selectable portion of the game map displayed at the browser client) onto the inner area of a game map according to an embodiment of the invention;
- Fig. 10:: An exemplary code listing for requesting a map block picture according to an embodiment of the invention;
- Fig. 11:: An example of a picture comprising dynamic map data according to an embodiment of the invention;
- Fig. 12:: An exemplary code listing "getBlocksContaining" according to an embodiment of the invention;
- Fig. 13:: An exemplary code listing "TGLockedMapBlockRenderer" according to an embodiment of the invention;
- Fig. 14:: An exemplary code listing "getBlockId" according to an embodiment of the invention;
- Fig. 15:: An exemplary code listing "splitRectIntoInnerRects" according to an embodiment of the invention; and
- Fig. 16:: An exemplary sequence of steps performed by an embodiment of the invention when updating map data.

### 5. Detailed Description

### Map layout

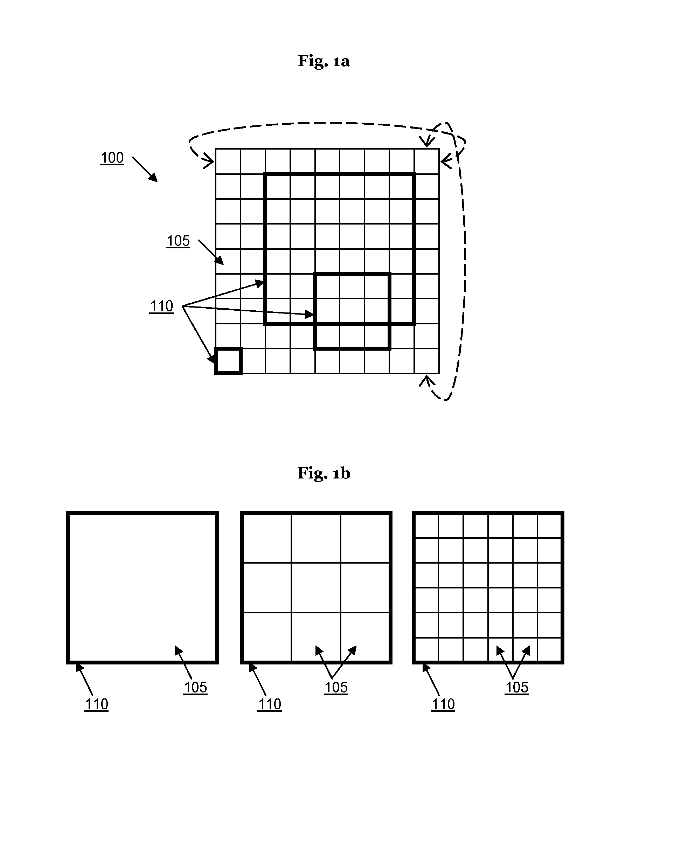

In the following, a presently preferred embodiment of the invention is described with respect to a game map 100 as schematically shown in Fig. 1a. As can be seen, the map 100 comprises a plurality of map tiles 105, which are arranged as a grid. The exemplary game map 100 in Fig. 1a comprises 9x9 map tiles 105 with coordinates -4, ..., 0, ..., +4 in x- and y-direction. As indicated by the dashed arrows, the game map is repeated at its borders in horizontal and vertical direction, i.e. the map tile coordinate (5/-5) corresponds to (-4/4). Thus, although the game map 100 actually only has a finite number of map tiles 105, the player conceives the game map 100 as "infinite". It should be appreciated that the exemplary game map 100 in Fig. 1a is extremely simplified and that much larger game maps 100 are possible, including edge lengths of thousands of map tiles 105. In a preferred embodiment, the game map 100 comprises 801 x 801 map tiles 105. In the following, the entirety of map tiles of a game map is referred to as the "inner area" of the game map, whereas a map tile with coordinates extending beyond the inner area (see above) belongs to the so-called "outer area" of the game map.

The individual map tiles 105 may be grouped into map blocks 110 of different sizes, as indicated by the bold rectangles in Fig. 1a. Preferably, a map block 110 is comprised of complete map tiles 105, i.e. a map block rectangle extends around the outer borders of the map tiles it encompasses. The map blocks 110 may extend over the border of the game map 100.

Depending on the zoom level, a map block 110 may comprise a different amount of map tiles 105, as exemplarily shown by the three map blocks 110 in Fig. 1a. When displayed (rendered) within a client computer's browser, each map block 110 preferably has the same size in pixels and the size of the contained map tiles 105 is scaled to fit the map block size (cf. Fig. 1b), so that the required amount of HTML elements stays constant at the client. In the example of Fig. 1b, a map block 110 encompasses 1 map tile 105 at zoom level o, 3 x 3 map tiles 105 at zoom level 1 and 6 x 6 map tiles 105 at zoom level 2. In a preferred embodiment, each map block 110 is rendered as one picture (preferably comprising a number of layers for the static and dynamic map data, as well as for displaying further additional information), which is far more efficient than rendering each individual map tile 105 as an individual picture (see further below). In a preferred embodiment, the graphics are generated by the web server in a format that allows displaying them at the browser client(s) without any additional browser plugins (such as Macromedia Flash), but only with standard HTML- and JavaScript capabilities.

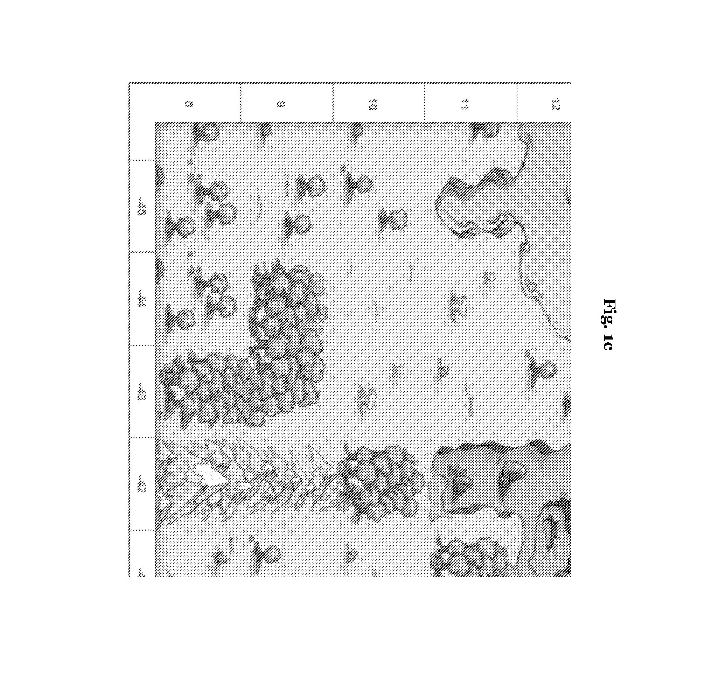

Fig. 1c shows a portion of an exemplary game map 100 with a variety of displayed map data 35 that represent the topology of the playing field. As can be seen, the map data 35 may comprise landscape elements, such as trees, forests, mountains, lakes, villages, oases, and the like. These are examples of static map data, which is player-independent and may be subject to server-side and / or client-side caching (see further below). As already explained further above, static map data changes only very rarely.

The game map 100 may further comprise dynamic map data that is player-dependent and preferably only subject to client-side caching. Examples of dynamic map data are player markings, coloured borders around villages, flags created by a player, or adventure icons that are created by the web server and editable by the players (not shown in Fig. 1c). The dynamic data thus changes more frequently than the static map data.

### Hardware / software infrastructure

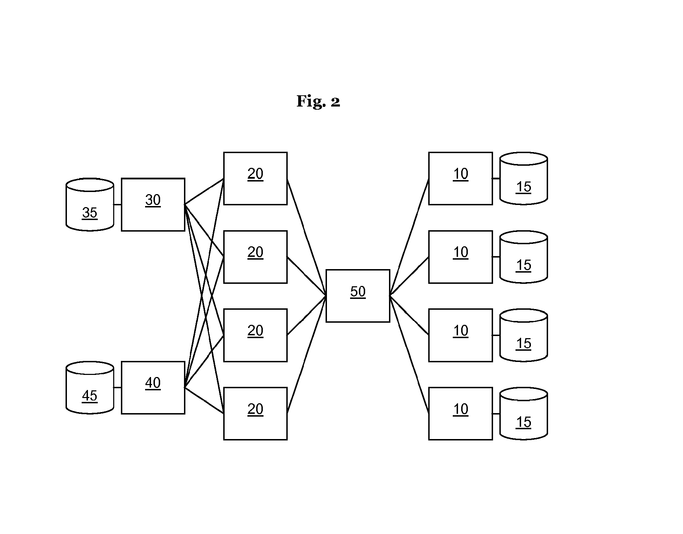

Fig. 2 shows a system according to an embodiment of the present invention. One or more browser clients 10 each hosting a web browser (not shown in Fig. 2) serve as endpoints for the players wanting to participate in the game. Generally, any device capable of providing web browser functionality may serve as a client 10, such as a desktop computer, laptop, PDA, mobile phone, or the like.

One or more web servers 20 take requests from the client(s) 10 and generate graphics (hereinafter also referred to as "images" or "pictures"), which are then assembled to a game map 100 at the client(s) 10. The web servers 20 are independent of each other and web servers may be added or removed during runtime. In the following, the client(s) 10 and web server(s) 20 will be referred to in the singular form for the sake of simplicity. However, it will be appreciated that the present invention may be used with any amount of clients and servers.

The web server 20 and client 10 may communicate with each other via an optional load balancer 50, which distributes client requests among the web servers 20 (e.g. equally in a round robin fashion, or depending on the current workload of the individual web servers 20).

Each web server 20 receives the map data 35 needed for generating the map 100 from one or more database server(s) 30. Currently preferred is an embodiment with one central database server 30 (as shown in Fig. 2), e.g. a MySQL server, which hosts the complete map data 35_{.} Further, each web server 20 may have access to a cache 45, e.g. via a cache server 40 (such as a memcache; cf. Fig. 2). Additionally or alternatively, at least some of the web servers 20 may comprise a storage means (such as a hard drive; not shown in Fig. 2) serving as a local cache 45.

### Operation of exemplary embodiments

In the following, the operation of exemplary embodiments of the present invention in various scenarios will be described in more detail.

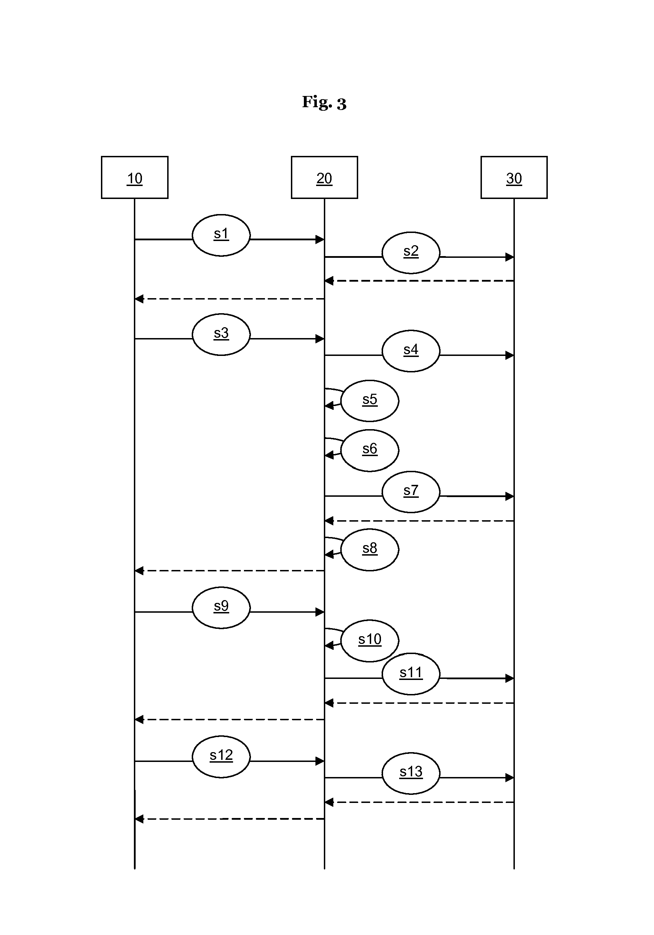

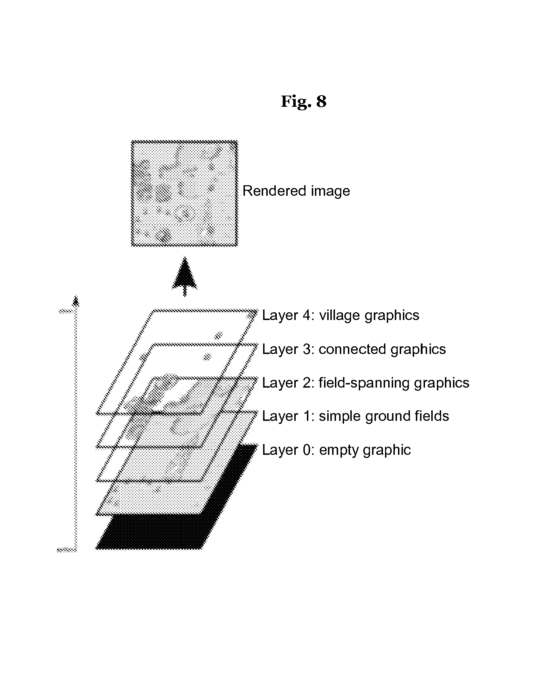

Fig. 3 shows a scenario wherein the client 10 requests a map block 110 of the game map 100 that is neither cached at the client 10 nor at the web server 20. As can be seen, in step s1, the client 10 requests the map block 110 from the web server 20. In step s2, the web server 20 obtains a list of markings within the visible area (i.e. the "selectable portion" displayed at the requesting browser client 10) from the database server 30. The list of markings may comprise dynamic map information that is provided to the at least one browser client 10 separately from the static and dynamic map data (see below). The web server 20 generates a container / placeholder for the requested map block 110 (preferably HTML/JavaScript code). The container, which does not comprise any map blocks 110 yet) is then returned to the client 10. In step s3, the client 10 (preferably via the received container, e.g. the JavaScript code) requests static map block(s) 110 from the web server 20 in order to fill the empty container. In step s4, the web server 20 obtains the global map block version number from the database server 30 (which is initially created by the database server 30). In step s5, the web server 20 obtains the local map block version number from the cache 45 (either via the separate cache server 40 or from a local cache 40, e.g. a hard drive of the web server 20). The local map block version number is preferably created by the at least one web server 20 and corresponds to the global map block version number. In step s6, the web server 20 calls a function for generating a graphic comprising the static map data 35 (cf. Fig. 8). In step s7, the necessary static map data 35 is obtained from the database server 30. The web server 20 then generates the picture comprising the static map data 35. In step s8, the web server 20 stores the generated graphic and the corresponding map block version number in the cache 45 (e.g. the web server's local cache or the cache accessible via the cache server 40). The web server 20 then delivers the graphic to the client 10, which places it into the container received beforehand. In step s9, the client 10 (e.g. via the JavaScript code) requests the dynamic map data 35 from the web server 20. In step s10, the web server 20 calls a function for generating a dynamic map block. In step s11, the web server 20 obtains the dynamic map data from the database server 30. The web server 20 generates a picture comprising the dynamic map data and delivers it to the client 10, which places it into the container, on top of the static graphic received beforehand. In step s12, the client 10 (e.g. via the JavaScript code) requests additional information (e.g. tooltips, flags, etc.) from the web server 20. The web server 20 obtains the requested information from the database server 30 and returns it to the client 10, preferably coded in JavaScript Object Notation (JSON). It will be appreciated that the above sequence of steps is only one of a wide variety and that the static and dynamic map data as well as the additional information may be requested by the browser client and delivered by the web server in any order, or even in parallel.

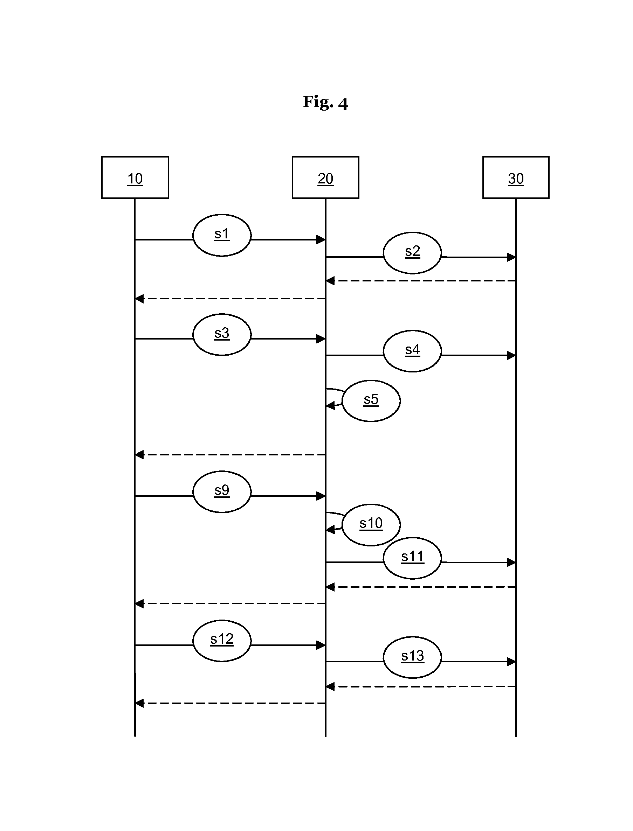

Fig. 4 shows a scenario wherein the client 10 requests a map block 110 of the game map 100, wherein the graphic representing the map block 110 is already cached at the web server 20. As can be seen, steps s1 to s5 correspond to the steps explained above in connection with Fig. 3. After having obtained both the global and the local map block version number, the web server 20 determines that both versions match and thus delivers the picture that is already cached at the web server 20 to the client 10. The database server 30 is not accessed in this case ad steps s6 to s8 shown in Fig. 3 are omitted. The subsequent steps s9 to s13 correspond to those shown in Fig. 3.

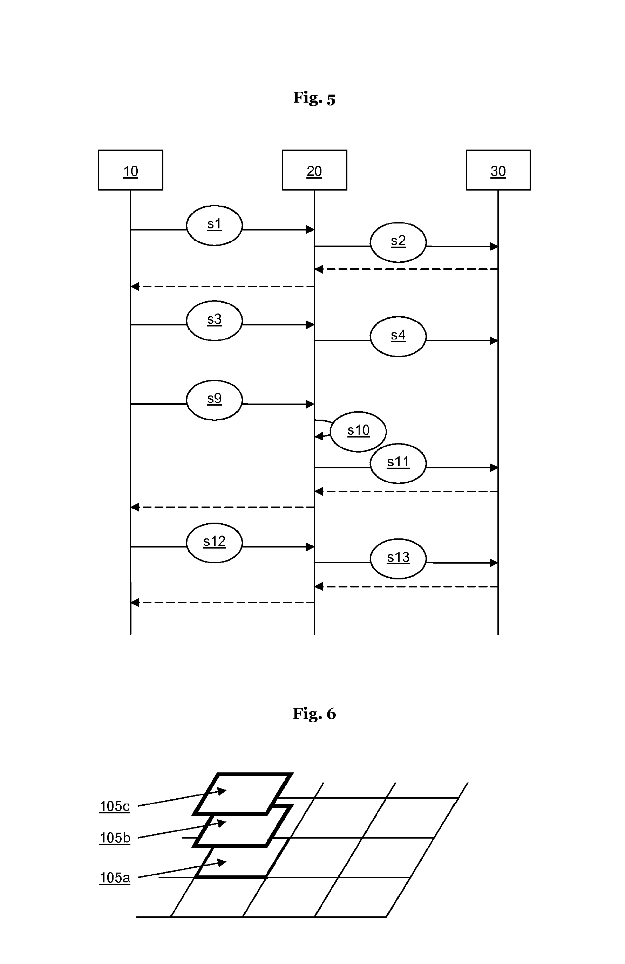

Fig. 5 shows a scenario wherein the client 10 requests a map block 110 of the game map 100, wherein the graphic representing the map block 110 is already cached at the client 10. As can be seen, steps s1 to s4 correspond to the steps explained above in connection with Fig. 3. Then, the web server 20 determines that the ETag provided by the client 10 matches the global map block version number. Thus the web server 20 instructs the client 10 to use the graphic that is already cached at the client 10. The subsequent steps s9 to s13 correspond to those shown in Fig. 3.

### Client(s) 10 / web browser(s)

Map Layout: The game map 100 is preferably generated (rendered) at the client 10 based on the map data 35 provided by the web server 20, preferably with a constant amount of map blocks 110. As shown in Fig. 6, each map block 110 (and thus also each map tile 105) is preferably assembled in a layered fashion, with a layer 105a comprising static map data that changes only rarely, e.g. villages (see above), a layer 105b comprising dynamic map data that changes frequently, e.g. player markings (see above) and a layer 105c comprising one or more icons that change frequently. Zooming may be achieved by changing (e.g. replacing or scaling) the pictures within a map block 110, so that the client performance is independent of the zoom level.

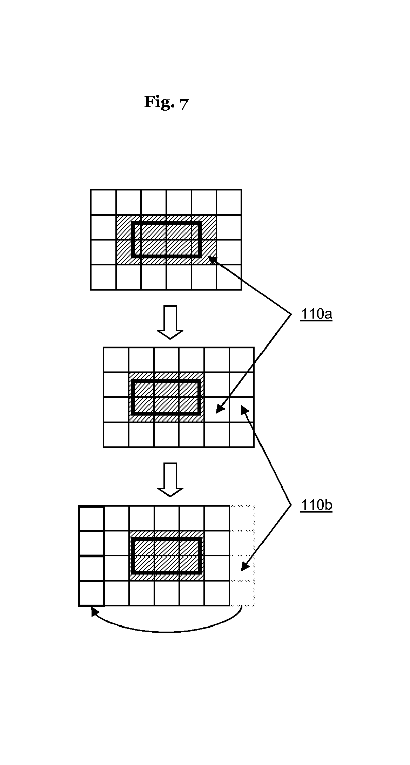

Scrolling: Typically, a player can see only a selectable portion of the entire game map 100 during a game, i.e. only a subset of the entirety of map blocks 110 comprised in the game map 100. In Fig. 7, the area of the game map 100 that is visible to the player ("visible area" / "selectable portion") is illustrated by the bolded rectangle. When the player scrolls the game map 100, i.e. the game map 100 moves in horizontal and / or vertical direction beneath the visible area, some map blocks 110 that were within the visible area before the scrolling might escape the visible area (note the shaded map block 110a in the top picture of Fig. 4 that escaped the visible area in the middle picture). Map blocks 110 that are no longer within the player's visible area may then be shifted to the opposite side of the game map 100 (cf. the bottom part of Fig. 4, wherein the map block 110b was shifted to the left of the game map 100), thereby leading to the impression of an "infinite map". Shifted map blocks are preferably emptied and an update mechanism requests the corresponding map 35 data from the web server 20 in order to display it on the respective map blocks after they were shifted. Preferably, map blocks 110 that are closer to the visible area are updated first, so that the player does not notice the shifting. The map blocks 110 that are shifted and already loaded with new map data 35 before they enter the visible area are referred to as the "pre-load area" (cf. the bolded blocks in the bottom part of Fig. 4). The needed amount of map blocks 110 at the client 10 depends on the size of the visible area and the size of the pre-load area.

Zooming: When the player changes the zoom level, preferably all map blocks 110 are emptied, the zoom level is adjusted as desired, and all map blocks 110 are loaded with the corresponding new map data 35 at the new zoom level. This may involve generating new graphics for the respective map blocks 110 at the desired zoom level and / or scaling the graphics to fit the browser client's display settings.

Field coordinates / mouse picking: In order to display correct tooltips (i.e. detail information displayed e.g. when a player "hovers" over an element such as a village on the game map), the client has to determine on which pixel on the display means which map tile 105 is located. The client knows the pixel and field dimensions of the individual map blocks 110 and can by means of the relative pixel position within a map block 110 or multiple map blocks 110 calculate the corresponding map tile position (coordinate system change).

### Web server(s) 20

The web server 20 generates the picture(s) of the game map 100 for the client 10 (i.e. the images/pictures for the static and dynamic map data 35). Further, the web server 20 may provide the client 10 with additional map data, such as icons and tooltips. Preferably, the web server 20 generates, per map block 110, one picture comprising the corresponding static map data and one picture comprising the corresponding dynamic map data, while the additional map data is delivered to the client separately from the picture(s) representing the static and dynamic map data.

### Rendering map blocks 110

Input data: Rendering a map block 110 depends on the area to be displayed on the map (preferably in the form of "AABB" in map tiles 105, e.g. 0/1 to 60/40) and the size of the visible area (the selectable portion to be displayed at the client's browser) in pixels (e.g. 100 x 100). The zoom level is determined from these inputs. The larger the visible area at a constant area to be displayed, the lower the zoom level.

Rendering: The individual map layers are preferably generated from top to bottom and drawn into an initially empty graphic (alpha blending). Fig. 8 is an exemplary embodiment for a static map block 105, wherein the empty graphic in layer 0 is first overlaid with simple ground fields in layer 1 (e.g. grass, desert, etc.). Layer 2 adds field-spanning graphics, e.g. for displaying lakes that span multiple map tiles 105 (cf. Fig. 1c). Layer 3 adds further connected graphics (e.g. map elements that extent over multiple map tiles, such as mountains or rivers), and layer 4 finally adds the top-most elements to the game map 100, e.g. villages. The individual layers taken together then form the completely rendered graphic representing the static map data for a map block 110, as shown on the top of Fig. 8. The individual layers are preferably assembled from single colours and / or single images/pictures, respectively. The images are preferably scaled to fit the map block size, or a zoom level specific image is chosen. Also a combination of both is possible, i.e. choosing the image that fits best and scaling it to the desired size.

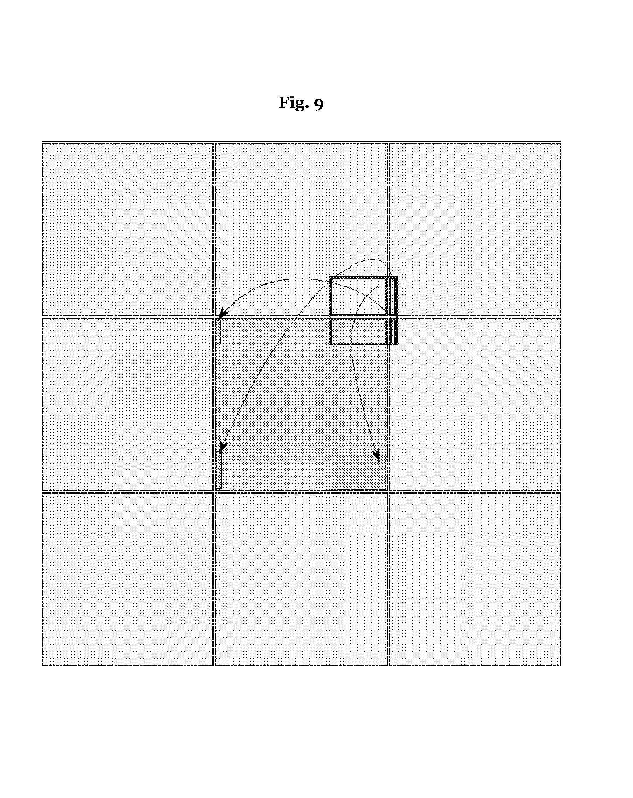

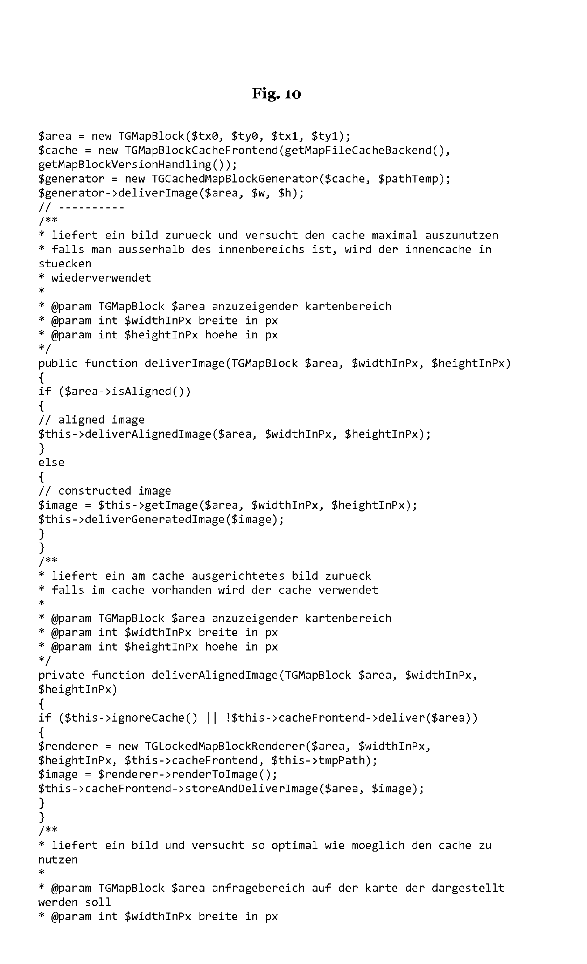

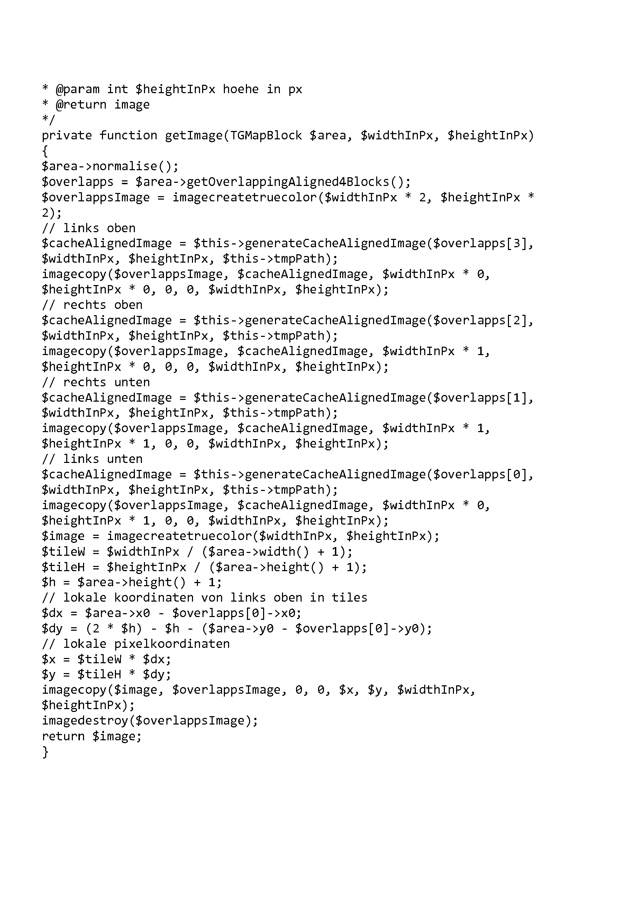

When a map block 110 is requested that extends beyond the border of the "inner area" of the game map (see above), the content of the requested map block is assembled from four portions of the "outer area" of the game map, wherein the "outer area" of the game map is the area that is obtained by shifting map blocks from the respective opposite side. Fig. 9 shows an example, wherein the requested area (depicted by the rectangular box in Fig. 9) is assembled from four portions of the "inner area" of the game map. Fig. 10 shows an exemplary implementation of the above-explained functionality.

Dynamic map blocks are rendered similarly as explained above, but different layers with different images and data sources may be used. In a preferred embodiment, a graphic with only one layer is generated to represent the dynamic map data of a particular map block.

Delivering static map blocks: Static map blocks (i.e. map blocks with data that is player-independent) are preferably generated by the web server 20 only when they are requested by the client 20 and temporally stored on the web server 20. Further, on the client 10, a browser cache 15 may be used for temporally storing (caching) the received map graphics, preferably by means of ETags (a special header field in HTTP 1.1). The cached graphics are preferably reused on the client 10 and / or server 20 as long as the map data does not change in the respective area. To this end, each map block 110 is assigned a unique identifier (block ID); see further below. Each block ID corresponds to a local version number (which is a snapshot of the information currently contained in the database) and a global version number (which is preferably a counter in the database that is increased each time the respective map block changes). Based on a difference between the local and global version, it can be determined whether the cached graphic is still up to date. The ETag is preferably generated from the block ID and the version of the block. Thus, the client cache functions correctly, irrespective of which web server 20 processes the request.

If the requested picture is not yet present (cached) at the web server 20 (i.e. if it is out-dated or was not yet generated), the picture is generated by the web server 20 and cached locally, together with the current version number. To this end, the web server 20 may use the locking algorithm explained further below, so that the web server 20 has to generate the pictures only once.

Since the outer blocks occur rarely within the game, the outer blocks are preferably cached only on the web server 20. However, it is also possible to cache such blocks at the client 10, e.g. by generating an ETag from the four ETags of the aligned blocks from which the picture is assembled.

Delivering dynamic map blocks: Dynamic map blocks depend on the player and / or the current map information. Thus, the respective pictures are generated at the web server 20 "on-the-fly", i.e. when needed, and are sent to the client 10, preferably without caching.

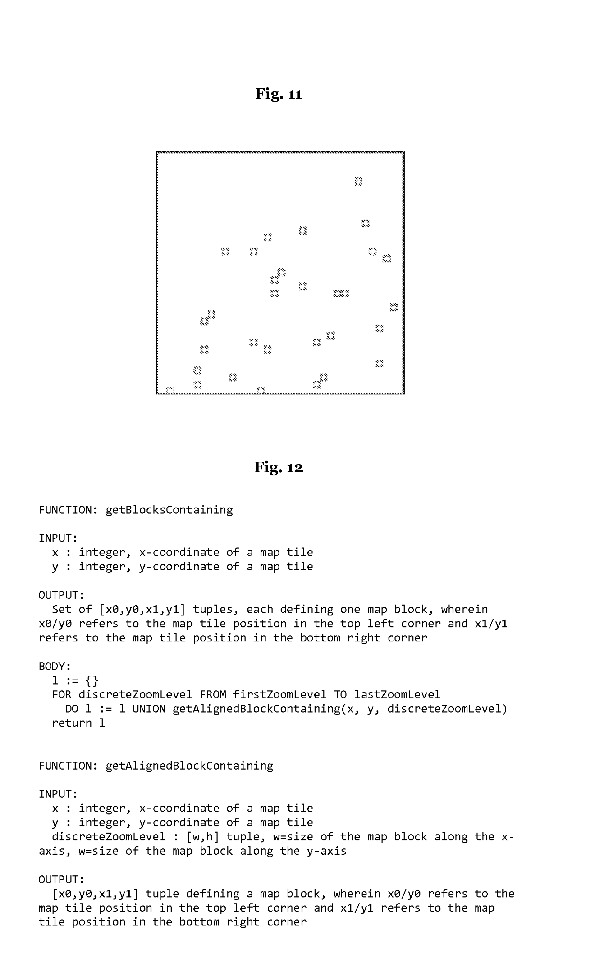

Dynamic blocks comprise information which would be too expensive to display as individual elements on the client-side, e.g. markings (such as coloured rectangles around villages; cf. Fig. 11) and which are supposed to be visible also at a zoomed-out level. Experience shows that densely populated maps comprise approximately one marking per map tile. In a visible area of 400 x 400 fields, this would result in 160,000 markings.

Rendering dynamic map blocks is similar to rendering static map blocks (see above). However, there is preferably only one layer with markings.

In one embodiment, dynamic pictures (i.e. pictures comprising dynamic map data) are not cached at the client 10. However, it is also possible to perform a client-side caching, e.g. by means of ETags, in that the ETag is generated from the global block version, the markings created by the player. It will be appreciated that ETags are only one of a wide variety of implementation alternatives and that any other technique may be used for implementing a kind of checksum for the data cached at the client.

Invalidating generated map blocks: If a map tile 105 of the game map 100 changes so that the graphic of the corresponding map block 110 changes, the web server 20 marks the cached graphic as invalid. In this case, the global version number of all map blocks 110 that comprise the respective map tile 105 is increased. The determination of which map blocks 110 are affected is explained further below. Triggered by the change in the global version number, the web server 20 generates the graphic anew when it is requested the next time.

If multiple changes occur before a map block 110 is requested by the client 10, the map block 11ß is preferably only generated anew when the next request is received. An exemplary implementation of the respective database tables is explained further below.

### Database server 30 / database 35

The database (e.g. a MySQL database) of the database server 30 (cf. Fig. 2) comprises in one embodiment the complete map data 35 and / or a table comprising the global block version numbers.

Global block version numbers: The table of global block version numbers comprises in one embodiment a field "blockId" for storing the ID of the map blocks 110 and / or a field "version" for storing the current version numbers of the map blocks 110.

Map data 35: The map data is distributed among various database tables. An efficient access is in one embodiment ensured by means of RTREEs.

### Exemplary functions

Fig. 12 shows an exemplary pseudo-code listing of a function "getBlocksContaining", which serves for calculating all map blocks 110 in all zoom levels that comprise a particular map tile 105. Since the map blocks 110 are aligned and disjoint, each map tile 105 is located in exactly one map block 110 per zoom level. As can be seen in Fig. 12, the function "getBlocksContaining" takes as input two numbers x and y representing the x- and y-coordinate of the map tile 105. The function outputs a set of 4-tuples each defining one map block 110 that contains the input map tile 105. To this end, the function iterates over the available zoom levels and at each zoom level calls the helper function "getAlignedBlockContaining" (cf. Fig. 12). The latter returns a 4-tuple defining the searched map block at the specified zoom level.

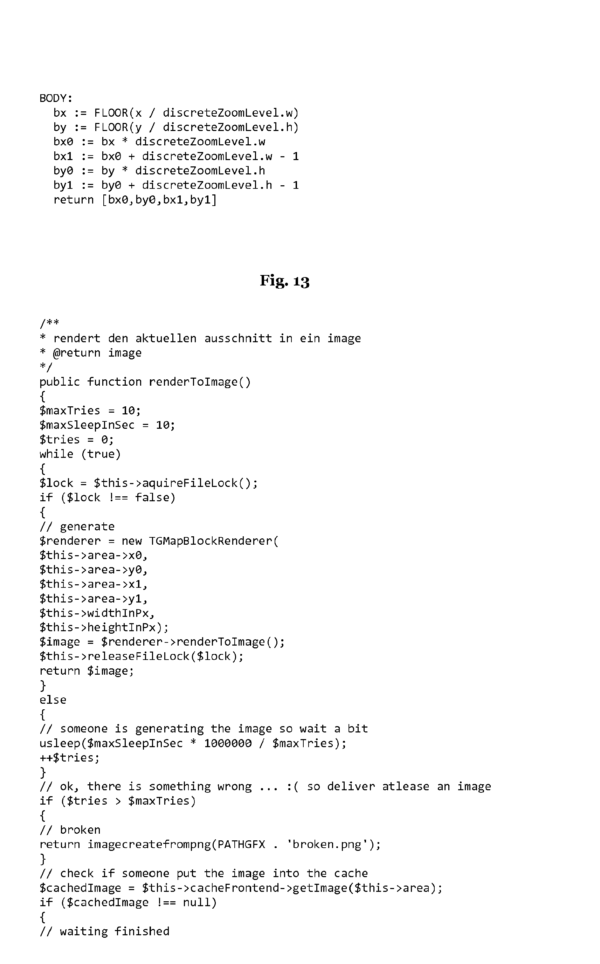

Fig. 13 shows an exemplary implementation of a function "TGLockedMapBlockRenderer", which serves for attempting to acquire a lock onto the map block 110 to be generated. If the lock is obtained, the graphic for the map block 110 is generated and the lock is released thereafter. Otherwise, the process waits until the graphic is accessible, i.e. until another process that is currently generating the graphic releases it.

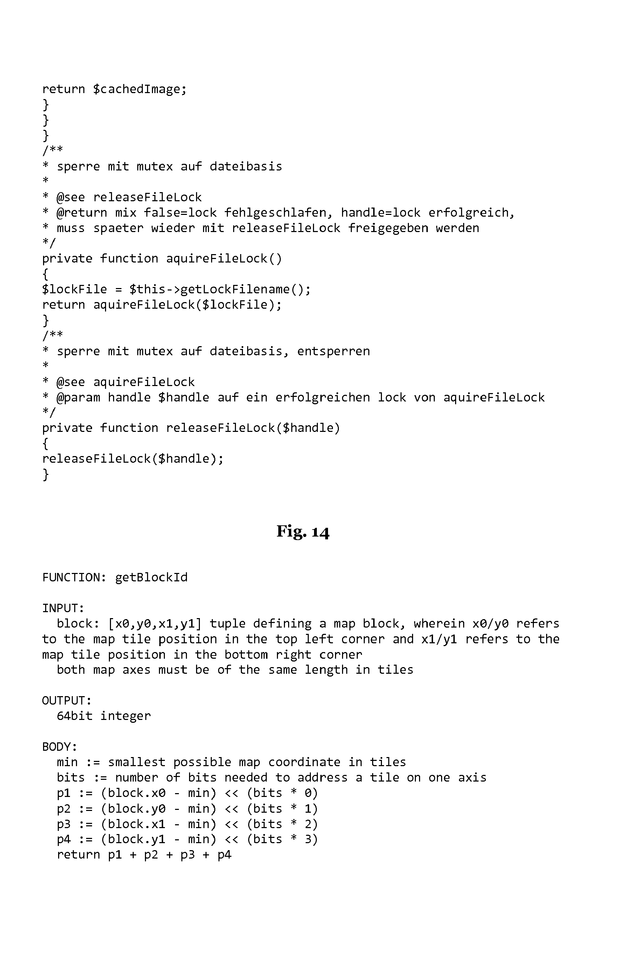

Fig. 14 shows an exemplary pseudo-code listing of a function "getBlockId", which takes the coordinates of the requested area as input and combines them into a 64-bit ID. 64 bit are sufficient in an embodiment of a game map 100 having 801 x 801 map tiles 105. The returned 64-bit integer is a (bijectively) unique identifier of the respective map block 110.

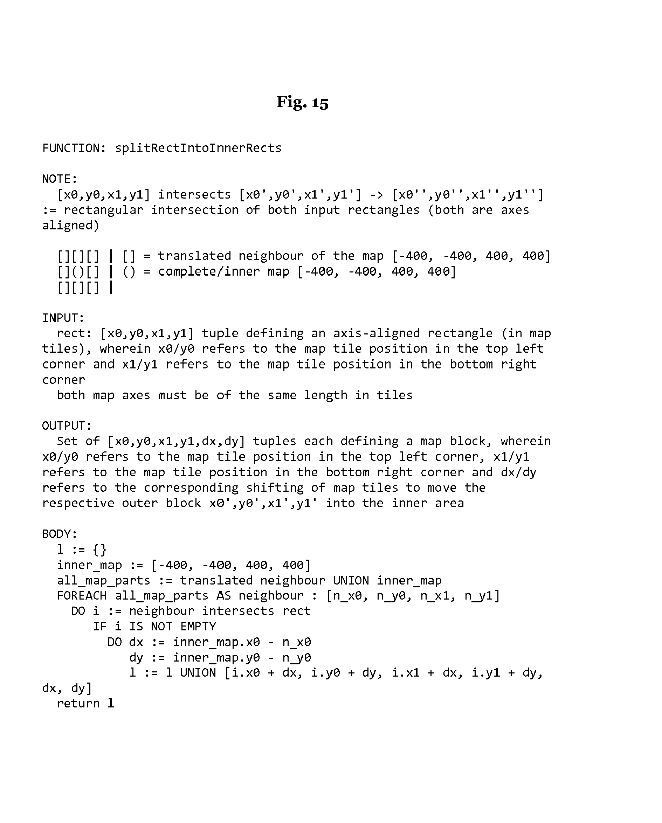

Fig. 15 shows an exemplary pseudo-code listing of a function "splitRectIntoInnerRects", which serves for splitting requested areas into a composition of suitable inner areas. To this end, the inner area is transformed 8 times, which results in 3 x 3 map areas (1 x inner area + 8 x outer areas). The intersections of the requested area with the different map areas and the corresponding transformations result in the composition of suitable inner areas (cf. also Fig. 9).

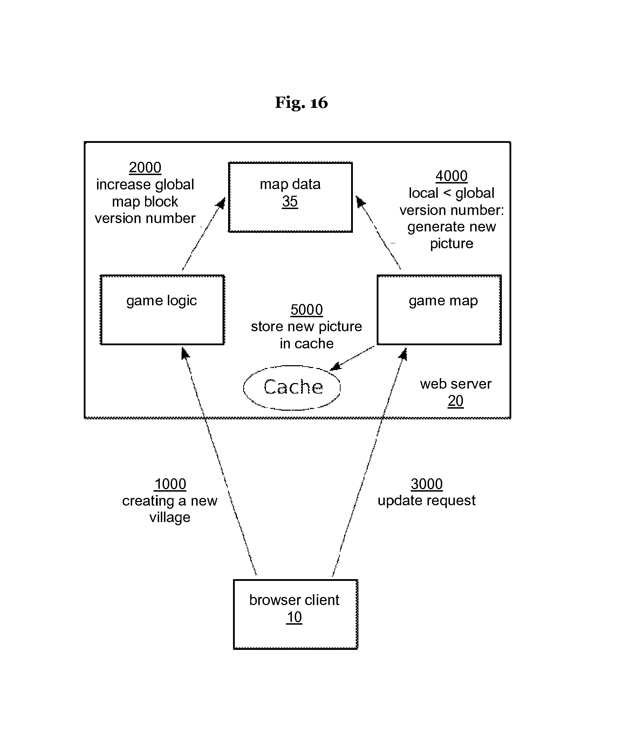

Fig. 16 shows an exemplary interaction scenario between the browser client(s) 10 and the web server(s) 20 when updating one or more elements on the game map 100. As can be seen in Fig. 16, in step 1000 the player acting at the browser client 10 creates a new village on the game map 100. As a result, a game logic of the browser game (e.g. located at the web server 20) increases in step 2000 the global map block version number(s) of the map block(s) 110 that are affected by this manipulation of the game map 100. It will be appreciated that creating a new village (step 1000) is only one of a variety of examples for an event that triggers a change on the game map 100. Further, the present invention is not limited to events that are triggered by the browser client 10, but also events generated by the web server 20 itself may lead to a manipulation of the game map 100 (in which case step 1000 in Fig. 16 would be omitted). As can be seen in step 3000 of Fig. 16, when the web server 20 receives the next request from a browser client 10 for updating at least the selected portion of the game map 100 displayed at the respective browser client 10, the web server 20 checks in step 4000 whether the cached version of the respective picture is still up-to-date. In the present example, it is not, since the game map 100 has changed due to the newly created village. Thus, the web server 20 generates one or more new picture(s) for the affected map blocks 110, stores the new picture(s) in the cache (step 5000) and delivers the picture(s) to the requesting browser client 10.

## Claims

1. A method for displaying a game map (100) of a browser-based online multi-player game, wherein each browser client (10) displays only a selectable portion of the game map (100) and wherein the game map (100) is modified by actions of a plurality of players of the game, the method comprising the following steps:
a. performing at least one game action by a first browser client (10) of a first player that leads to a modification on the game map (100); and
b. upon changing a selection of the game map (100) to be displayed by a second browser client (10) of a second player, updating at least the selected portion of the game map (100) to reflect the modification for display at the second browser client (10).

2. A method for providing a game map (100) of a browser-based online multi-player game, wherein each browser client (10) displays only a selectable portion of the game map (100) and wherein the game map (100) is modified by actions of a plurality of players of the game, the method comprising the following steps:
a. detecting at least one game action performed at a first browser client (10) of a first player that leads to a modification on the game map (100); and
b. upon detecting a change of a selection of the game map (100) to be displayed by a second browser client (10) of a second player, providing an update of at least the selected portion of the game map (100) to reflect the modification for display at the second browser client (10).

3. The method of claim 1 or 2, wherein step b. is performed in response to the second player scrolling the portion of the game map (100) displayed on the second browser client (10).

4. The method of any of the preceding claims, wherein step b. is performed in response to the second player zooming in or out of the portion of the game map (100) displayed on the second browser client (10).

5. The method of any of the preceding claims, wherein the at least one game action in step a. comprises creating a common marking on the game map (100) and wherein the common marking is hidden in step b. on the updated game map (100) of the second browser client (10), if the second player does not belong to a predetermined group.

6. The method of claim 1, comprising the steps of:
- scrolling the selected portion of the game map (100) by the second browser client (10); and
- if the selected portion approaches a border of the game map (100), the second browser client (10) shifting a part of the game map (100) that is no longer visible to the opposite side of the game map (100), so that it is visible beyond the border of the game map (100).

7. The method of claim 2, wherein method step b. comprises the steps of:
- receiving by at least one web server (20) a request from the second browser client (10) for updating at least the selected portion of the game map (100);
- generating by the at least one web server (20) static map data for at least the selected portion of the game map (100), wherein the static map data is not affected by any game action;
- generating by the at least one web server (20) dynamic map data for the game map (100), wherein the dynamic map data is affected by the game action;
- sending the static and the dynamic map data from the at least one web server (20) to the second browser client (10) for assembly at the second browser client (10) to generate the updated selected portion of the game map (100).

8. The method of claim 7, comprising the further step of storing the generated static map data in a cache (45) that is accessible to the at least one web server (20).

9. The method of claim 8, wherein the generated dynamic map data is not stored in the cache (45).

10. The method of claim 8 or 9, wherein the cache (45) is a shared cache accessible to a plurality of web servers (20).

11. The method of claim 2, comprising the steps of
- detecting a change of a zoom level of the selected portion of the game map (100) by the second browser client (10);
- generating by the at least one web server (20) at least one graphic representing a part of the game map (100) at the new zoom level; and
- transmitting the at least one graphic from the at least one web server (20) to the requesting browser client (10).

12. The method of claim 1, wherein method step b. comprises the steps of:
- receiving at the second browser client (10) static and dynamic map data from at least one web server (20); and
- assembling the static and dynamic map data at the second browser client (10) to generate the updated selected portion of the game map (100).

13. The method of the preceding claim, comprising the step of storing the received static map data and / or the dynamic map data in a browser cache (15) of the second browser client (10).

14. A server system (20) for providing a game map (100) of a browser-based online multi-player game to a plurality of browser clients (10), the server system being adapted to perform a method according to any of the preceding claims 2-5 or 7-11.

15. A plurality of browser clients (10) for displaying a game map (100) of a browser-based online multi-player game, the browser clients (10) being adapted to perform a method of any of the preceding claims 1,3 - 6,12 or 13.
